# EUROPÄISCHE PATENTANMELDUNG

(11) **EP 4 653 842 A1**
(43) Veröffentlichungstag der Anmeldung: **26.11.2025**
(21) Anmeldenummer: 25175309.1
(22) Anmeldetag: 09.05.2025
(51) Int. Cl.: G01N 21/05, G01N 21/03, G01F 1/661, G01F 15/18

(54) **DURCHFLUSSMESSZELLE MIT EINEM EINE FLUIDPASSAGE BEGRENZENDEN WECHSELEINSATZ UND WECHSELEINSATZ DAFÜR**

(30) Priorität: 24.05.2024 DE 102024114605
(71) Anmelder: PLS Prozess- Labor- und Sensortechnik GmbH, 07745 Jena (DE)
(72) Erfinder: Fischer, Carsten, 07745 Jena (DE)
(74) Vertreter: REHBERG HÜPPE + PARTNER

(57) **Zusammenfassung**

Eine Durchflussmesszelle (1) begrenzt eine Fluidpassage (3) radial zu einer Hauptachse (2). Die Durchflussmesszelle (1) ist in Richtung der Hauptachse (2) von einer ersten Anschlussfläche und einer zweiten Anschlussfläche begrenzt und weist zwei, einander über die Hauptachse (2) hinweg gegenüberliegende Messkanäle (21, 22) zum Einführen von optischen Elementen auf. In einen Grundkörper (11) der Durchflussmesszelle (1) ist ein die Fluidpassage (3) begrenzender Wechseleinsatz (8) eingesetzt. Die beiden Messkanäle (21, 22) erstrecken sich durch den Grundkörper (11) hindurch bis in einen Grundkörper (11) des Wechseleinsatzes (8) hinein und enden in dem Wechseleinsatz (8) an zwei Messfenstern (15). Die Messfenster (15) sind in den Formkörper (13) des Wechseleinsatzes (8) eingedichtet, so dass der Wechseleinsatz (8) um die Fluidpassage (3) herum dicht ist, und sie liegen sich über ein Messvolumen (16) der Fluidpassage (3) hinweg in einem festen Messabstand (17) gegenüber, so dass der Messabstand (17) in dem Wechseleinsatz (8) durch die Relativlage der Messfenster (15) gegenüber dem Formkörper (13) des Wechseleinsatzes (8) definiert ist.

## Beschreibung

### TECHNISCHES GEBIET DER ERFINDUNG

Die Erfindung bezieht sich auf eine Durchflussmesszelle, die an anderer Stelle auch nur als Durchflusszelle bezeichnet wird, die eine Fluidpassage radial zu einer virtuellen Hauptachse begrenzt, die ihrerseits in Richtung der Hauptachse von einer ersten Anschlussfläche und einer zweiten Anschlussfläche begrenzt ist und die zwei einander über die Hauptachse hinweg gegenüberliegende Messkanäle zum Einführen von optischen Elementen aufweist. Insbesondere betrifft die Erfindung eine solche Durchflussmesszelle, in deren Grundkörper ein die Fluidpassage begrenzender Wechseleinsatz eingesetzt ist, wobei sich die beiden Messkanäle durch den Grundkörper hindurch bis in einen Formkörper des Wechseleinsatzes hinein erstrecken.

Weiterhin betrifft die Erfindung einen solchen Wechseleinsatz für eine Durchflussmesszelle.

Durchflussmesszellen werden beispielsweise verwendet, um mit Hilfe der optischen Elemente Messungen an einem Fluid vorzunehmen, das durch die Fluidpassage der jeweiligen Durchflussmesszelle strömt. Das Fluid ist dabei insbesondere ein Fluid, das in einem geschlossenen System geführt wird, weil es aggressiv ist und/oder nicht verunreinigt werden soll und/oder unter einem erhöhtem Druck steht und/oder sich auf einer erhöhten Temperatur befindet.

### STAND DER TECHNIK

Durchflussmesszellen der eingangs beschriebenen Art sind von der Anmelderin bekannt. In einen Grundkörper aus Edelstahl ist ein Inlay aus Tantal oder PTFE eingesetzt, das die durch die Durchflussmesszelle verlaufende Fluidpassage in radialer Richtung begrenzt. Die beiden Messkanäle erstrecken sich durch den Grundkörper der Durchflussmesszelle und durch das Inlay hindurch. In die Messkanäle eingeführte optische Elemente stehen mit Messfenstern an ihren distalen Enden nach innen über das Inlay über. Die Messfenster liegen sich in der Fluidpassage in einem Messabstand gegenüber. Die optischen Elemente werden in dem Inlay und/oder dem Grundkörper gegenüber dem Messkanal abgedichtet. Zur Veränderung des Messabstands sind die optischen Elemente längs der Messkanäle zueinander zu justieren. Dabei ist die Abdichtung der optischen Elemente gegenüber dem Inlay bzw. dem Grundkörper der Durchflussmesszelle zu erhalten.

Aus der EP 0 186 755 A2 ist eine Durchflusszelle mit einer auf einander gegenüberliegenden Seiten von optischen Fenstern begrenzten Messkammer und Verbindungskanälen zu äußeren Anschlüssen für die Zu- und Ableitung einer zu messenden Flüssigkeit bekannt. Die Messkammer ist durch eine Bohrung in einer mit plangeschliffenen und polierten Flächen versehenen inneren Platte und beidseitig an der inneren Platte angesprengten äußeren Platten begrenzt. Die Verbindungskanäle bestehen aus durch die äußeren Platten abgedeckten Nuten in den Flächen der inneren Platte, wobei die Platten aus einem ansprengbaren Material bestehen und die äußeren Platten lichtdurchlässig sind. Das Material der äußeren Platten kann Glas, Quarz oder Saphir sein, während das Material für die inneren Platten Keramik ist.

Aus der DE 10 2017 120 510 B3 ist eine druckstabile 3D-gedruckte NMR-Durchflusszelle bekannt. Die für die Kernspinresonanzspektroskopie (NMR) vorgesehene Durchflusszelle umfasst einen kreiszylindrischen Grundkörper aus Keramik sowie zwei einander auf einer zentralen Symmetrieachse des kreiszylindrischen Grundkörpers gegenüberliegende Aufnahmen für jeweils eine Kapillare. Dabei sind die Kapillaren mit dem kreiszylindrischen Grundkörper jeweils im Sinne eines Explosionsschutzes unfehlbar stoffschlüssig verbunden.

Aus der DE 10 2022 130 221 A1 ist eine Messzelle zur Durchführung optischer Messungen mindestens einer Messgröße eines in der Messzelle befindlichen oder durch die Messzelle hindurch strömenden Mediums bekannt. Durch eine erste Außenwand und durch eine der ersten Außenwand gegenüberliegende zweite Außenwand der Messzelle hindurch verlaufen Ausnehmungen; und zwei Fensteraufnahmen weisen transparente Fenster auf. Jede Fensteraufnahme weist mehrere radial nach außen vorstehende Vorsprünge auf; und jede Fensteraufnahme ist in einer aus mehreren Einbautiefen auswählbaren Einbautiefe in die der jeweiligen Fensteraufnahme zugeordnete Ausnehmung einsetzbar. Dazu weist eine diese Ausnehmung außenseitlich allseitig umgebende Wandung der Messzelle innenseitig für jede auswählbare Einbautiefe einen Satz von der Anzahl der Vorsprünge entsprechenden Auflageflächen auf, die bezogen auf eine Längssachse der Ausnehmung in radialer Richtung derart um die Ausnehmung herum verteilt angeordnet sind, dass die Vorsprünge der Fensteraufnahme auf den Auflageflächen des jeweiligen Satzes zur Auflage gebracht werden können, und in axialer Richtung derart angeordnet sind, dass die Fensteraufnahme in der dem jeweiligen Satz von Auflageflächen zugeordneten Einbautiefe in der Ausnehmung angeordnet ist, wenn deren Vorsprünge auf den Auflageflächen des jeweiligen Satzes von Auflageflächen aufliegen.

Aus der nach dem Prioritätstag dieser Patentanmeldung veröffentlichten DE 10 2023 107 376 A1 ist eine Vorrichtung zur Messung einer Messgröße eines Mediums bekannt, die eine von dem Medium durchströmbare Messzelle aufweist. In einen Innenraum der Messzelle mündet einlassseitig und auslassseitig jeweils ein Kanal. Weiterhin mündet in dem Innenraum ein erster Stutzen. Eine erste Komponente ist derart durch den ersten Stutzen hindurch in den Innenraum eingesetzt ist, dass ein stirnseitiger Abschnitt der ersten Komponente in den Innenraum hineinragt. Ein erstes Formteil umgibt den stirnseitigen Abschnitt der ersten Komponente und einen im Innenraum an die erste Komponente angrenzenden Hohlraum außenseitlich allseitig und weist für jeden Kanal jeweils eine den Hohlraum mit dem jeweiligen Kanal verbindende, als Querschnittswandler ausgebildete Aussparung auf.

### AUFGABE DER ERFINDUNG

Der Erfindung liegt die Aufgabe zugrunde, eine Durchflussmesszelle und einen Wechseleinsatz dafür aufzuzeigen, die eine Einstellung eines Messabstands zwischen zwei Messfenstern vereinfachen, welche sich über ein Messvolumen der Fluidpassage hinweg gegenüberliegen.

### LÖSUNG

Die Aufgabe der Erfindung wird durch die Merkmale der unabhängigen Patentansprüche gelöst. Die abhängigen Patentansprüche definieren bevorzugte Ausführungsformen der erfindungsgemäßen Durchflussmesszelle und des erfindungsgemäßen Wechseleinsatzes dafür.

### BESCHREIBUNG DER ERFINDUNG

Bei einer erfindungsgemäßen Durchflussmesszelle, die eine Fluidpassage radial zu einer virtuellen Hauptachse begrenzt, die ihrerseits in Richtung der Hauptachse von einer ersten Anschlussfläche und einer zweiten Anschlussfläche begrenzt ist und die zwei, einander über die Hauptachse hinweg gegenüberliegende Messkanäle zum Einführen von optischen Elementen aufweist, wobei in einem Grundkörper der Durchflussmesszelle ein die Fluidpassage begrenzender Wechseleinsatz eingesetzt ist, wobei sich die beiden Messkanäle durch den Grundkörper hindurch bis in einen Formkörper des Wechseleinsatzes hinein erstrecken, enden die beiden Messkanäle in dem Wechseleinsatz jeweils an einem von zwei Messfenstern, die in den Formkörper des Wechseleinsatzes eingedichtet sind und die sich über ein Messvolumen der Fluidpassage hinweg in einem festen Messabstand gegenüberliegen.

Bei der erfindungsgemäßen Durchflussmesszelle sind die Messfenster Teil des Wechseleinsatzes und ist der Messabstand, in dem sich die Messfenster über das Messvolumen der Fluidpassage hinweg gegenüberliegen, in dem Wechseleinsatz definiert, d. h. durch die Relativlage der Messfenster gegenüber dem Formkörper des Wechseleinsatzes. Zudem ist der Wechseleinsatz um die Fluidpassage herum dicht, indem die Messfenster in den Formkörper des Wechseleinsatzes eingedichtet sind. Die optischen Elemente werden so nur in die Bereiche der Messkanäle eingeschoben, die durch die Messfenster und deren Eindichtung in den Formkörper des Wechseleinsatzes gegenüber der Fluidpassage abgedichtet sind. Die optischen Elemente können somit verschoben oder ausgewechselt werden, ohne dass dafür die Fluidpassage bzw. deren Abdichtung geöffnet werden muss. Auch ein Auswechseln der optischen Elemente hat keinen Einfluss auf den Messabstand der Messfenster, der gegenüber dem Formkörper des Wechseleinsatzes definiert ist und fest bleibt. Er muss somit nach einem Entfernen und/oder Auswechseln der optischen Elemente nicht aufwändig wiederhergestellt werden. Bei den optischen Elementen kann es sich beispielsweise um sogenannte Kollimatoren oder andere Bestandteile von optischen Messeinrichtungen handeln.

Die Messfenster bestehen aus einem im für die optischen Elemente relevanten Wellenlängenbereich, der irgendwo zwischen dem UV und dem MIR-Bereich liegen kann, optisch durchlässigen Material, und sie können aus den für das jeweilige optische Messverfahren geeigneten Materialien ausgewählt werden. Vielfach werden die Messfenster aus Quarz oder Saphir ausgebildet sein. Vorzugsweise bestehen sie aus Saphir.

Um eine mechanische Abstützung der Messfenster an dem Formkörper des Wechseleinsatzes zu erreichen, wie sie insbesondere für die Definition des festen Messabstands erforderlich ist, kann mindestens eines der Messfenster oder können beide Messfenster in den Formkörper eingeklebt und/oder eingeschraubt und/oder mit dem Formkörper gebondet oder diffusionsverschweißt und/oder bis gegen eine Anschlagfläche in den Formkörper eingeführt und in dem Formkörper rückwärtig durch ein Abstützelement abgestützt sein.

Die notwendige Abdichtung der Messfenster gegenüber dem Formkörper des Wechseleinsatzes kann dadurch erreicht werden, dass mindestens eines der Messfenster und vorzugsweise beide Messfenster durch Einkleben, Bonden, Diffusionsschweißen und/oder mittels einer umlaufenden Dichtung eingedichtet sind.

Wichtig ist einerseits die definierte Lage des jeweiligen Fensters und andererseits dessen Abdichtung gegenüber dem Formkörper. Hinzu können die Kriterien einer leichten Montage der Messfenster in dem Formkörper des Wechseleinsatzes und/oder deren Auswechselbarkeit kommen, wenn diese beispielsweise durch die Beaufschlagung mit dem zu messenden Fluid erblindet sind. Auch wenn keine separate Auswechselbarkeit der Messfenster gegeben ist, können diese zusammen mit dem Formkörper des Wechseleinsatzes ausgewechselt werden. Die optischen Elemente selbst geraten nicht in Kontakt mit dem zu messenden Fluid und werden durch dieses nicht beansprucht. Weiterhin kann dann, wenn keine separate Auswechselbarkeit der Messfenster angestrebt wird, sowohl das Festlegen als auch das Abdichten der Messfenster zumindest im Wesentlichen durch deren Einkleben und/oder Einschrauben in den Formkörper bewirkt werden.

Der Formkörper des Wechseleinsatzes kann grundsätzlich aus demselben Material ausgebildet sein wie der Grundkörper der Durchflussmesszelle. Vorzugsweise besteht der Formkörper jedoch aus einem anderen Material als der Grundkörper der Durchflussmesszelle, insbesondere einem gegenüber dem zu messenden Fluid besonders beständigen Material. Konkret kann der Formkörper aus Keramik ausgebildet sein. Konkret kann der Formkörper zu mindestens 90 Gewichtsprozent aus einem Metalloxid, wie beispielsweise Aluminiumoxid, bestehen. Vorzugsweise besteht er zu mindestens 90 Gewichtsprozent aus Zirconiumoxid. Der Grundkörper wird vielfach aus Edelstahl ausgebildet sein und den Formkörper vor Druck- und Stoßbelastungen schützen.

Der Formkörper des Wechseleinsatzes kann eine koaxial zu der Hauptachse ausgerichtete zylindermantelabschnittförmige Außenumfangsfläche aufweisen, die zur Führung längs der Hauptachse an einer zylindermantelabschnittförmigen Innenumfangsfläche des Grundkörpers ausgebildet ist. Mit anderen Worten kann der Grundkörper eine Passbohrung zur Aufnahme des Wechseleinsatzes aufweisen.

Der Formkörper des Wechseleinsatzes endet in Richtung der Hauptachse mit Teilen der ersten Anschlussfläche und der zweiten Anschlussfläche, die vorzugsweise als durchgängig um die Hauptachse umlaufende Dichtflächen ausgebildet sind. Der dichte Anschluss der Durchflussmesszelle in Richtung der Hauptachse wird dann ebenfalls durch den Wechseleinsatz bewirkt. Dabei kann der Grundkörper der Durchflussmesszelle mit seinen Teilen der ersten Anschlussfläche und der zweiten Anschlussfläche axiale Kräfte auf die Durchflussmesszelle aufnehmen, die zwar zu deren Abdichtung gedacht ist, die aber die hierfür notwendige axiale Kraft bereits überschreiten und die die Integrität des Wechseleinsatzes gefährden könnten.

Zur Ausrichtung des Wechseleinsatzes in dem Grundkörper der Durchflussmesszelle kann mindestens ein Ausrichtelement vorgesehen sein, das in einen der Messkanäle in den Grundkörper eingeschraubt ist und das sich in dem einen der Messkanäle geführt bis in den Formkörper des Wechseleinsatzes erstreckt. Alternativ kann ein solches Ausrichtelement in einem der Messkanäle in dem Grundkörper geführt und in diesem Messkanal in den Grundkörper eingeschraubt sein. Dieses Ausrichtelement kann zugleich ein Abstützelement für das Messfenster seinerseits rückwärtig abstützen.

Der Grundkörper der Durchflussmesszelle kann eine koaxial zu der Hauptachse angeordnete Ringform und parallel zu der Hauptachse verlaufende randgeschlossene Durchgangslöcher aufweisen. Diese Durchgangslöcher können den Durchtritt von Spannschrauben ermöglichen, die zwei an der Durchflussmesszelle in Richtung der Hauptachse angrenzende Dichtflansche eines Rohrsystems zum Führen des Fluids über die Durchflussmesszelle hinweg gegeneinander verspannen, um das Rohrsystem abzudichten.

In den Messkanälen können axiale Anschläge für die dorthinein einzuführenden optischen Elemente vorgesehen sein, um die optischen Elemente in definierten Relativlagen zu den Messfenstern auszurichten. Zudem können an dem Grundkörper der Durchflusszelle Führungs- und/oder Haltebuchsen für die optischen Elemente vorgesehen sein, beispielsweise um diese in einer bestimmten Position in Richtung der Messkanäle zu fixieren.

Ein erfindungsgemäßer Wechseleinsatz weist von der bis hierher beschriebenen Durchflussmesszelle den Formkörper mit den eingedichteten Messfenstern in dem über das Messvolumen der Fluidpassage hinweg festen Messabstand auf. Ein erfindungsgemäßer Wechseleinsatz kann als Teil eines Sets von mindestens zwei Wechseleinsätzen vorgesehen sein, von denen jeweils einer in den Grundkörper der erfindungsgemäßen Durchflussmesszelle einsetzbar ist und die sich hinsichtlich der von ihnen begrenzten Fluidpassagen, der Messvolumina ihrer Fluidpassagen, ihrer Messfenster, insbesondere der Form und/oder des Materials ihrer Messfenster, und/oder ihrer Messabstände unterscheiden.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Dichtung die Rede ist, ist dies so zu verstehen, dass genau eine Dichtung, zwei Dichtungen oder mehr Dichtungen vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine Ansicht einer erfindungsgemäßen Durchflussmesszelle mit Blickrichtung längs ihrer Hauptachse.
- **Fig. 2**: ist ein Schnitt durch die Durchflussmesszelle gemäß Fig. 1 längs ihrer Hauptachse und einer Schnittlinie B-B, welche in Fig. 1 eingezeichnet ist.
- **Fig. 3**: ist ein weiterer Schnitt durch die Durchflussmesszelle gemäß Fig. 1 längs der Hauptachse und längs einer Schnittlinie A-A, welche in Fig. 1 eingezeichnet ist.
- **Fig. 4**: ist ein Schnitt durch die Durchflussmesszelle gemäß Fig. 1, zu dem ihre Hauptachse normal verläuft, wobei in Fig. 3 zu sehende Ausrichtelemente entfernt sind und ein Messfenster mit Ringdichtung und Abstützelement demontiert, aber nach Art einer Explosionszeichnung dargestellt ist; und
- **Fig. 5**: ist eine Fig. 1 entsprechende Ansicht eines Wechseleinsatzes der Durchflussmesszelle gemäß Fig. 1 mit dem in Fig. 3 dargestellten und in Fig. 4 weggelassenen Ausrichtelementen.

### FIGURENBESCHREIBUNG

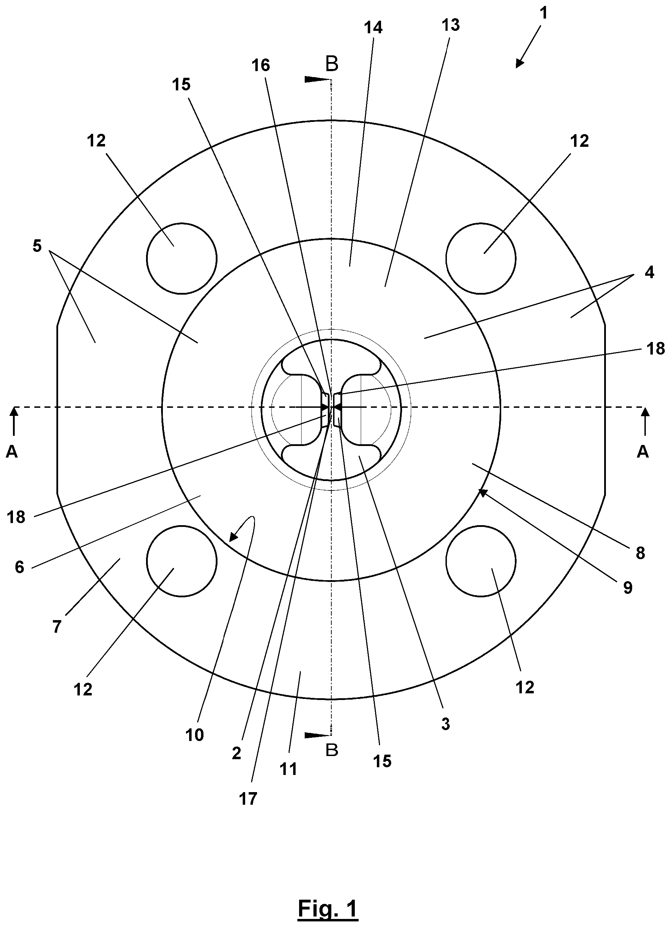

Die in **Fig. 1** dargestellte Durchflussmesszelle 1 weist eine virtuelle Hauptachse 2 auf. Die Durchflussmesszelle 1 begrenzt eine Fluidpassage 3, durch die ein zu messendes Fluid längs der Hauptachse 2 strömt, in radialer Richtung zu der Hauptachse 2. In Richtung der Hauptachse ist die Durchflussmesszelle 1 von einer ersten Anschlussfläche 4, die hier sichtbar ist und einer in Fig. 1 nicht sichtbaren rückwärtigen weiteren Anschlussfläche 5 begrenzt. Dabei weisen beide Anschlussflächen jeweils einen inneren Teil 6 und einen äußeren Teil 7 auf. Der innere Teil 6 der Anschlussflächen 4 und 5 wird von einem Wechseleinsatz 8 ausgebildet, der unmittelbar an die Fluidpassage 3 angrenzt und der mit einer koaxial zu der Hauptachse 2 ausgerichteten zylindermantelabschnittförmigen Außenumfangsfläche 9 an einer ebenfalls koaxial zu der Hauptachse 2 ausgerichteten zylindermantelabschnittförmigen Innenumfangsfläche 10 eines Grundkörpers 11 geführt ist. Der Grundkörper 11 bildet den jeweils anderen Teil 7 der Anschlussflächen 4 und 5 aus und weist randgeschlossene Durchgangslöcher 12 für den Durchtritt von (nicht dargestellten) Spannschrauben auf. Mit solchen Spannschrauben können zwei benachbarte Dichtflansche eines Rohrleitungssystems gegeneinander verspannt und dichtend an die Anschlussflächen 4 und 5 angedrückt werden. Die inneren Teile 6 der Anschlussflächen 4 und 5 und die wesentlichen die Fluidpassage 3 begrenzenden Bereiche des Wechseleinsatzes 8 werden von einem Formkörper 13 aus Keramik 14 ausgebildet. Messfenster 15, die sich über ein Messvolumen 16 im Bereich der Hauptachse 2 hinweg in einem Messabstand 17 gegenüberliegen, bestehen aus Saphir 18. Der Messabstand 17 ist viel kleiner als der Maximale Durchmesser der Fluidpassage 3. Entsprechend stehen an die Messfenster 15 anschließende Bereiche des Formkörpers 13 zu der Hauptachse 2 hin in die Fluidpassage 3 vor. Die Messfenster 15 sind jeweils in den Formkörper 13 eingedichtet, so dass die Fluidpassage 3 durch den Wechseleinsatz 8 abgedichtet ist und der Grundkörper 11 der Durchflussmesszelle 1 radial zu der Hauptachse 2 jenseits dieser Abdichtung liegt.

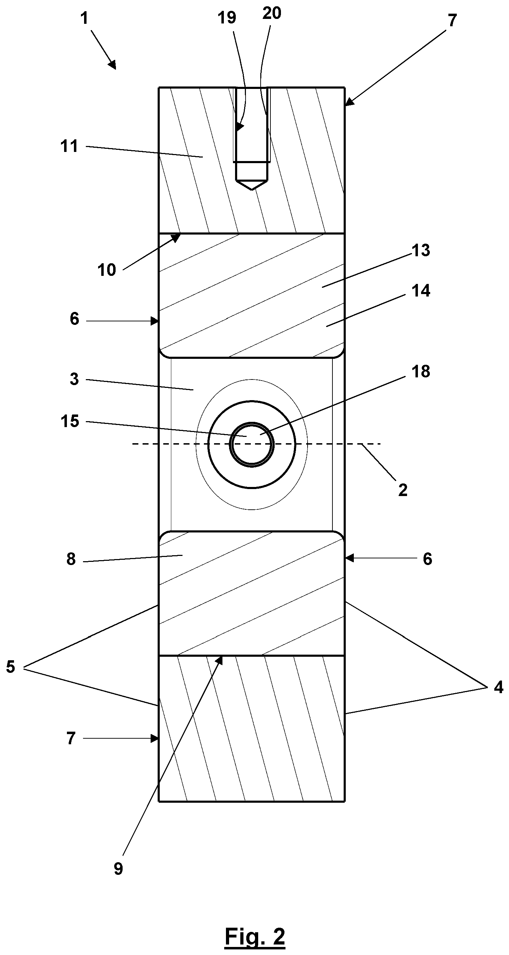

**Fig. 2** zeigt zusätzlich zu den Details gemäß Fig. 1 eine mit einem Innengewinde 19 versehene Sackbohrung 20 im Außenumfang des Grundkörpers 11, die zu Montage- und Handhabungszwecken dient.

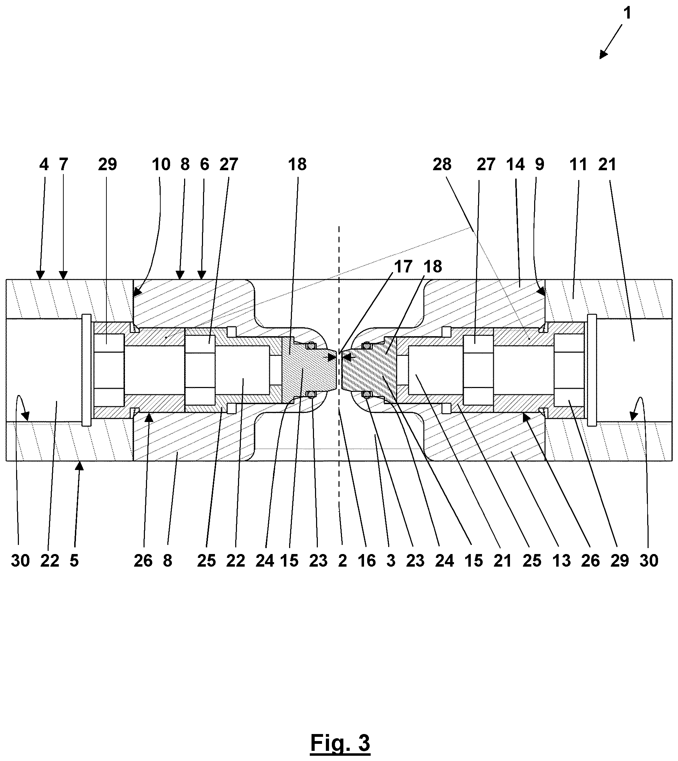

**Fig. 3** ist ein senkrecht zu dem Schnitt von Fig. 2 verlaufender Längsschnitt durch die Durchflussmesszelle 1, und dieser Schnitt verläuft zugleich axial durch zwei Messkanäle 21 und 22, die einander über die Hauptachse 2 hinweg gegenüber liegen. Die Messkanäle 21 und 22 erstrecken sich zueinander koaxial durch den Grundkörper 11 der Durchflussmesszelle 1 und den Formkörper 13 des Wechseleinsatzes 8. Die Messkanäle 21 und 22 enden an den Messfenstern 15. Die Messfenster 15 sind mit Ringdichtungen in Form von O-Ringen 23 gegenüber dem Formkörper 13 abgedichtet. Ihr Messabstand 17 wird durch voneinander weg gerichtete axiale Anschlagflächen 24 an dem Formkörper 13 definiert. Rückwärtig abgestützt sind die Messfenster 15 durch Abstützelemente 25, die in Innengewinde 26 im Innenumfang der Messkanäle 21 und 22 in dem Formkörper 13 eingeschraubt sind. Dabei können zum Einschrauben verwendete Werkzeugangriffsflächen 27 der Abstützelemente für ein Spezialwerkzeug ausgebildet sein, so dass ein Verwender der Durchflussmesszelle 1 die Abstützelemente nicht lösen und entfernen kann. Ebenfalls in die Innengewinde 26 eingeschraubt sind Ausrichtelemente 28, die in den Messkanälen 21 und 22 in dem Grundkörper 11 geführt sind und so den Wechseleinsatz 8 gegenüber dem Grundkörper 11 in Umfangsrichtung um die Hauptachse 2 und längs der Hauptachse 2 ausrichten. Werkzeugangriffsflächen 29 der Ausrichtelemente 28 sind so ausgebildet, dass die Ausrichtelemente 28 von einem Verwender der Durchflussmesszelle 1 aus den Innengewinden 26 herausgeschraubt werden können, um den Wechseleinsatz 8 auszuwechseln. In Innengewinde 30 im Innenumfang der Messkanäle 21 und 22 im Bereich des Grundkörpers 11 können (nicht dargestellte) Führungs- und/oder Haltebuchsen für (ebenfalls nicht dargestellte) optischen Elemente einschraubt werden, die in die Messkanäle 21 und 22 einführbar sind, um durch die Messfenster 15 hindurch das Fluid in dem Messvolumen 16 über den Messabstand 17 hinweg zu messen.

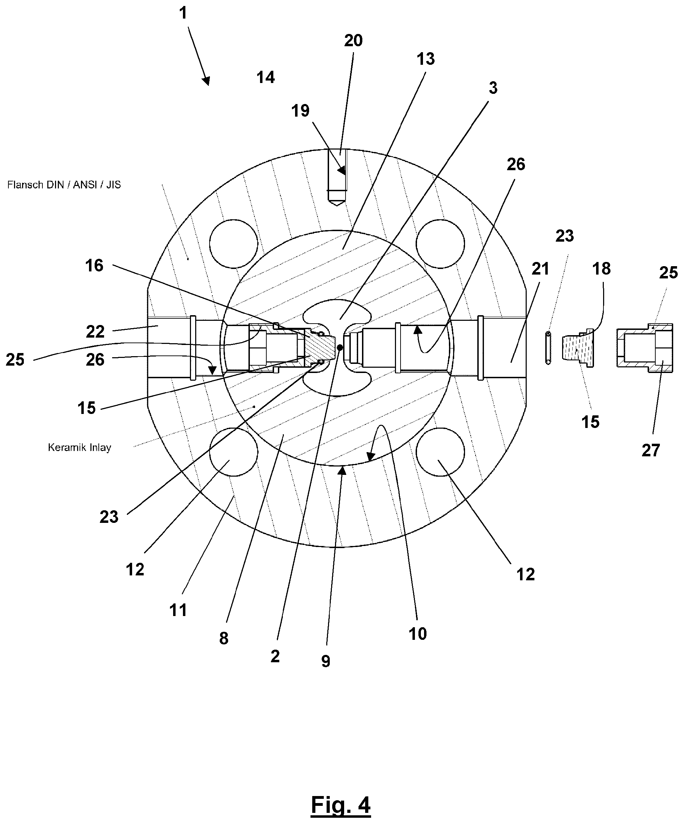

**Fig. 4** zeigt einen zu den Schnitten gemäß den Fig. 2 und 3 senkrechten Schnitt, in dem die Ausrichtelemente 26 gemäß Fig. 3 weggelassen sind und eines der Prozessfenster 15 mit seinem O-Ring 23 und Abstützelement 25 in demontiertem Zustand gezeigt ist.

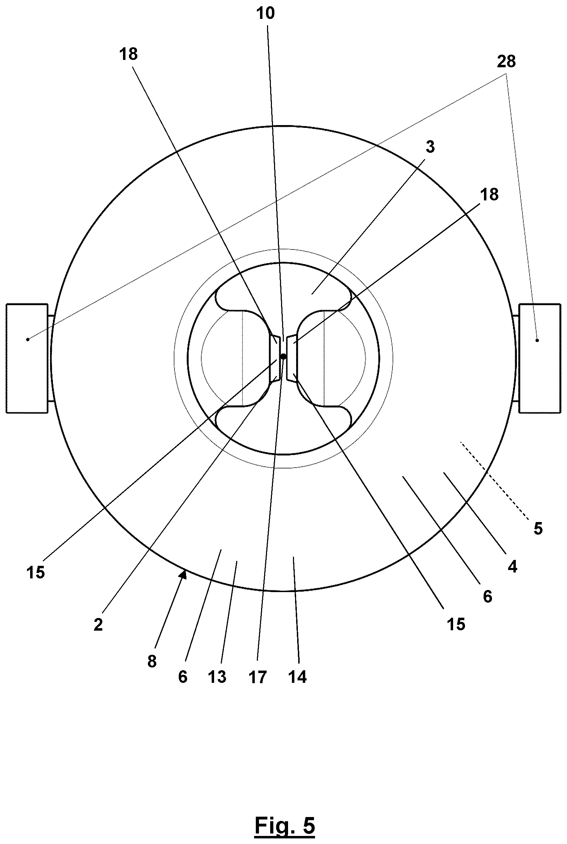

**Fig. 5** zeigt hingegen in separater Darstellung den Wechseleinsatz 8 zusammen mit den eingeschraubten Ausrichtelementen 28, aber ohne den Grundkörper 11 der Durchflussmesszelle. Der Wechseleinsatz 8 kann in einem Set mit weiteren Wechseleinsätzen vorgesehen sein, wobei sich die Wechseleinsätze 8 des Sets in irgendeiner Eigenschaft, beispielsweise der Form der Fluidpassage 3, der Größe des Messabstands 17 der Form und/oder des Materials der Messfenster 15 o. dgl. unterscheiden.

### BEZUGSZEICHENLISTE

- 1: Durchflussmesszelle
- 2: Hauptachse
- 3: Fluidpassage
- 4: Anschlussfläche
- 5: Anschlussfläche
- 6: innerer Teil der Anschlussflächen 4, 5
- 7: äußerer Teil der Anschlussflächen 4, 5
- 8: Wechseleinsatz
- 9: Außenumfang des Wechseleinsatzes
- 10: Innenumfang des Grundkörpers 11
- 11: Grundkörper
- 12: Durchgangsloch
- 13: Formkörper
- 14: Keramik
- 15: Messfenster
- 16: Messvolumen
- 17: Messabstand
- 18: Saphir
- 19: Innengewinde
- 20: Sackbohrung
- 21: Messkanal
- 22: Messkanal
- 23: O-Ring
- 24: Anschlagfläche
- 25: Abstützelement
- 26: Innengewinde
- 27: Werkzeugangriffsfläche
- 28: Ausrichtelement
- 29: Werkzeugangriffsfläche
- 30: Innengewinde

## Patentansprüche

1. Wechseleinsatz (8) für eine Durchflussmesszelle (1),
- die eine Fluidpassage (3) radial zu einer Hauptachse (2) begrenzt,
- die in Richtung der Hauptachse (2) von einer ersten Anschlussfläche (4) und einer zweiten Anschlussfläche (5) begrenzt ist und
- die zwei, einander über die Hauptachse (2) hinweg gegenüberliegende Messkanäle (21, 22) zum Einführen von optischen Elementen aufweist;
- wobei der Wechseleinsatz (8) so ausgebildet ist, dass er in einen Grundkörper (11) der Durchflussmesszelle (1) einsetzbar ist, um die Fluidpassage (3) zu begrenzen, wobei sich die beiden Messkanäle (21, 22) durch den Grundkörper (11) hindurch bis in den Wechseleinsatz (8) hinein erstrecken,
**dadurch gekennzeichnet, dass** die beiden Messkanäle (21, 22) in dem Wechseleinsatz (8) an zwei Messfenstern (15) enden, die in einen Formkörper (13) des Wechseleinsatzes (8) eingedichtet sind, so dass der Wechseleinsatz (8) um die Fluidpassage (3) herum dicht ist, und die sich über ein Messvolumen (16) der Fluidpassage (3) hinweg in einem festen Messabstand (17) gegenüber liegen, so dass der Messabstand (17) in dem Wechseleinsatz (8) durch die Relativlage der Messfenster (15) gegenüber dem Formkörper (13) des Wechseleinsatzes (8) definiert ist.

2. Wechseleinsatz (8) nach Anspruch 1, **wobei** die Messfenster (15) aus Quarz oder Saphir (18) ausgebildet sind.

3. Wechseleinsatz (8) nach Anspruch 1 oder 2, **wobei** mindestens eines der Messfenster (15) in den Formkörper (13) eingeklebt und/oder eingeschraubt und/oder mit dem Formkörper (13) gebondet oder diffusionsverschweißt und/oder bis gegen eine Anschlagfläche (24) eingeführt und rückwärtig durch ein Abstützelement (25) abgestützt ist, das seinerseits in den Formkörper (13) eingeklebt und/oder eingeschraubt und/oder mit dem Formkörper (13) gebondet oder diffusionsverschweißt und/oder bis gegen eine Anschlagfläche eingeführt und rückwärtig durch ein Abstützelement abgestützt ist.

4. Wechseleinsatz (8) nach einem der vorhergehenden Ansprüche, **wobei** mindestens eines der Messfenster (15) durch Einkleben, Bonden, Diffusionsschweißen und/oder mittels einer umlaufenden Dichtung, (23) in den Formkörper (13) eingedichtet ist.

5. Wechseleinsatz (8) nach einem der vorhergehenden Ansprüche, **wobei** der Formkörper (13) aus Keramik (14), vorzugsweise zu mindestens 90 Gewichtsprozent aus Zirconiumoxid, ausgebildet ist.

6. Wechseleinsatz (8) nach einem der vorhergehenden Ansprüche, **wobei** der Formkörper (13) eine koaxial zu der Hauptachse (2) ausgerichtete zylindermantelabschnittförmige Außenumfangsfläche (9) aufweist, die zur Führung längs der Hauptachse (2) an einer zylindermantelabschnittförmigen Innenumfangsfläche (10) des Grundkörpers (11) ausgebildet ist.

7. Wechseleinsatz (8) nach einem der vorhergehenden Ansprüche, **wobei** der Formkörper (13) Teile (6) der ersten Anschlussfläche (4) und der zweiten Anschlussfläche (5) aufweist, die als durchgängig um die Hauptachse (2) umlaufende Dichtflächen ausgebildet sind.

8. Set von mindestens zwei Wechseleinsätzen nach einem der vorhergehenden Ansprüche, **wobei** die mindestens zwei Wechseleinsätze (8) so ausgebildet ist, dass jeweils einer von ihnen in den Grundkörper (11) der Durchflussmesszelle (1) einsetzbar ist, wobei sich die mindestens zwei Wechseleinsätze (8) hinsichtlich der von ihnen begrenzten Fluidpassagen (3), der Messvolumina (16), ihrer Messfenster (15) und/oder ihrer Messabstände (17) unterscheiden.

9. Durchflussmesszelle (1),
- die eine Fluidpassage (3) radial zu einer Hauptachse (2) begrenzt,
- die in Richtung der Hauptachse (2) von einer ersten Anschlussfläche und einer zweiten Anschlussfläche begrenzt ist und
- die zwei, einander über die Hauptachse (2) hinweg gegenüberliegende Messkanäle (21, 22) zum Einführen von optischen Elementen aufweist;
- wobei in einen Grundkörper (11) der Durchflussmesszelle (1) ein die Fluidpassage (3) begrenzender Wechseleinsatz (8) nach einem der Ansprüche 1 bis 7 eingesetzt ist,
- wobei sich die beiden Messkanäle (21, 22) durch den Grundkörper (11) hindurch bis in einen Grundkörper (11) des Wechseleinsatzes (8) hinein erstrecken.

10. Durchflussmesszelle (1) nach Anspruch 9, **wobei** der Formkörper (13) des Wechseleinsatzes (8) aus einem anderen Material ausgebildet ist als der Grundkörper (11), wobei der Grundkörper (11) optional aus Metall, vorzugsweise einem Edelstahl, ausgebildet ist.

11. Durchflussmesszelle (1) nach Anspruch 9 oder 10, **wobei** mindestens ein Ausrichtelement
- in einem der Messkanäle (21, 22) in den Grundkörper (11) eingeschraubt ist und sich in dem einen der Messkanäle (21, 22) geführt bis in den Formkörper (13) erstreckt oder
- in einem der Messkanäle (21, 22) in dem Grundkörper (11) geführt ist und in dem einen der Messkanäle (21, 22) in den Grundkörper (11) eingeschraubt ist.
